(19) Europäisches Patentamt
European Patent Office
Office européen des brevets

(11) **EP 1 953 340 B1**

(12) **EUROPÄISCHE PATENTSCHRIFT**

(45) Veröffentlichungstag und Bekanntmachung des Hinweises auf die Patenterteilung:
**23.03.2016  Patentblatt 2016/12**

(21) Anmeldenummer: **08001650.4**

(22) Anmeldetag: **29.01.2008**

(51) Int Cl.:
*F01D 5/14* *(2006.01)*          *F04D 29/68* *(2006.01)*

(54) **Strömungsarbeitsmaschine sowie Rotorschaufel einer Strömungsarbeitsmaschine**

Flow machine and rotor shovel for a flow machine

Machine de traitement des écoulements et aube de rotor d'une machine de traitement des écoulements

(84) Benannte Vertragsstaaten:
**DE FR GB**

(30) Priorität: **02.02.2007   DE 102007005384**

(43) Veröffentlichungstag der Anmeldung:
**06.08.2008   Patentblatt 2008/32**

(73) Patentinhaber: **Rolls-Royce Deutschland Ltd & Co KG**
**15827 Blankenfelde-Mahlow (DE)**

(72) Erfinder: **Gümmer, Volker**
**15831 Mahlow (DE)**

(74) Vertreter: **Hoefer & Partner Patentanwälte mbB**
**Pilgersheimer Straße 20**
**81543 München (DE)**

(56) Entgegenhaltungen:
WO-A1-98/44240          GB-A- 580 806
US-A1- 2005 163 621

**Beschreibung**

Die vorliegende Erfindung bezieht sich auf Strömungsarbeitsmaschinen wie Bläser, Verdichter, Pumpen und Ventilatoren axialer, halbaxialer und radialer Bauart mit gasförmigem oder flüssigem Arbeitsmedium.

Die vorliegende Erfindung bezieht sich im Einzelnen auf Schaufeln von Strömungsarbeitsmaschinen wie etwa Bläsern, Verdichtern, Pumpen und Ventilatoren in axialer, halbaxialer oder auch radialer Bauart. Das Arbeitsmedium (Fluid) kann gasförmig oder flüssig sein.

Die Strömungsarbeitsmaschine kann eine oder mehrere Stufen mit jeweils einem Rotor und einem Stator umfassen, in Einzelfällen wird die Stufe lediglich durch einen Rotor gebildet. Der Rotor besteht aus einer Anzahl von Schaufeln, die mit der rotierenden Welle der Maschine verbunden sind und Energie an das Arbeitsmedium abgeben. Der Rotor kann mit oder ohne Deckband am äußeren Schaufelende ausgeführt sein. Der Stator besteht aus einer Anzahl feststehender Schaufeln, die nabenseitig wie gehäuseseitig mit festem oder freiem Schaufelende ausgeführt sein können. Die Rotortrommel und die Beschaufelung sind üblicherweise von einem Gehäuse umgeben, in anderen Fällen, z.B. bei Propellern oder Schiffsschrauben, existiert kein Gehäuse. Die Maschine kann auch einen Stator vor dem ersten Rotor, ein sogenanntes Vorleitrad aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Strömungsarbeitsmaschine bei Mehrstufigkeit zwei gegenläufige Wellen besitzen, so dass die Rotorschaufelreihen von Stufe zu Stufe die Drehrichtung wechseln. Hierbei existieren keine Statoren zwischen aufeinanderfolgenden Rotoren. Schließlich kann die Strömungsarbeitsmaschine alternativ eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe beherbergen.

Die Strömung im Spitzenbereich von Rotoren einer Strömungsarbeitsmaschine wie Bläsern, Verdichtern, Pumpen und Ventilatoren ist, obwohl dies bei der Auslegung oft vernachlässigt wird, von instationärer, also zeitlich veränderlicher Natur. So lassen sich von einem ruhenden Betrachter die in Umfangsrichtung der Maschine vorbeieilenden Nachlaufdellen der einzelnen Schaufeln beobachten; ein lang bekanntes Phänomen.

Weniger bekannt ist ein häufig im Relativsystem des Rotors festzustellendes Pulsieren des Strömungsfeldes im Blattspitzenbereich, das auf ein instabiles, schwankendes Verhalten der Leckageströmung am Radialspalt zurückzuführen ist. Diese oft mit einer Strömungsablösung an der Gehäusewand verbundene Radialspaltleckage zieht eine zeitlich stark schwankende Einengung des Rotorströmungskanals nach sich und nimmt auf diese Weise Einfluss auf das Verhalten der Profilgrenzschichten in den Schaufelschnitten in der Nähe des Gehäuses. Insbesondere bei transsonischen Rotoren sind mit dieser starken periodisch auftretenden Störung der Profilumströmung Einbußen bezüglich des Wirkungsgrades und der Abreißgrenze der Strömungsarbeitsmaschine verbunden. Die Lebensdauer der betroffenen Rotorschaufeln und/oder ihrer haltenden Scheiben kann ebenfalls beeinträchtigt sein.

Ein Weg der Problemlösung ist eine besondere Strukturierung des Gehäuses im Laufbereich der Schaufeln durch sogenannte Casing Treatments. Eine Gestaltung der Schaufeln selbst, durch eine Energetisierung der Profilgrenzschichten in gehäusenahen Schaufelschnitten, das Pulsieren der Blattspitzenströmung zu dämpfen oder zu unterdrücken, ist nicht bekannt.

Hingegen bekannt sind auf der Schaufeloberfläche platzierte Mittel, die bei transsonischen Rotoren den Punkt des Umschlages der Profilgrenzschicht von laminar zu turbulent fixieren sollen. Die Transitionsfixierungmittel sind sehr schmal, senkrecht zur Strömung ausgeführt (siehe EP-A-1 580 399) und gehen von der Annahme einer zweidimensionalen Strömung im spezifizierten Anwendungsbereich aus.

Der Weg, ein Pulsieren der Strömung im Blattspitzenbereich von Rotoren einer Strömungsarbeitsmaschine durch Strukturierung oder Einbauten im Gehäuse zu beheben, ist konstruktiv sehr aufwendig, erfordert eine komplizierte Auslegung und reduziert in den allermeisten Fällen den Wirkungsgrad. Die im Stand der Technik vorgeschlagenen Transitionsfixierungmittel sind aufgrund der vereinfachenden Annahmen nur bedingt wirksam.

Der Erfindung liegt die Aufgabe zugrunde, eine Strömungsarbeitsmaschine, insbesondere für ein Flugzeugtriebwerk sowie eine Rotorschaufel einer Strömungsarbeitsmaschine zu schaffen, welche bei einfachem Aufbau und einfacher, kostengünstiger Herstellbarkeit einen verbesserten Wirkungsgrad aufweisen.

Aus der WO 98/44240 ist eine Dampfturbine bekannt, die einen Strömungskanal mit einer Wand aufweist. In dem Strömungskanal sind in Schaufelkränzen Schaufeln angeordnet. Auf die Oberfläche der Schaufelblätter ist eine Rillenstruktur aufgebracht, welche sich angrenzend an das Fußteil und angrenzend an das Kopfteil erstreckt.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß wird die Aufgabe insbesondere durch eine Strömungsarbeitsmaschine mit zumindest einem mit Rotorschaufeln (3) versehen Rotor, wobei die Rotorschaufel (3) auf einer Saugseite (9) mindestens zwei Zonen unterschiedlicher Oberflächenbeschaffenheit aufweist, wobei die eine Zone zwischen einer Vorderkante (5) der Rotorschaufel (3), einer Gehäuselinie (1), einer Meridianstromlinie auf Spitzenwirbel-kritischer Schaufelhöhe (SLW) und einer sehnenorthogonalen Projektionslinie (EL) angeordnet ist und mit einer grenzschicht-energetisierenden Oberflächenstruktur versehen ist, wobei die Linie SLW auf einer wie folgt definierten relativen Kanalhöhe HW/W verläuft:

$$HW/W = 0{,}95 - (S/WHK)(0{,}35 + 0{,}15\,(1\text{-cos lambda}))$$

wobei

lambda der Staffelungswinkel am Rotorgehäuseschnitt,

S der Abstand zwischen zwei Rotorschaufeln (3) am Rotorgehäuseschnitt,

WHK eine Hinterkantenkanalweite,

W eine Kanalweite und

HW die in Kanalweitenrichtung gemessene Distanz zwischen der Nabe und der Linie SLW sind.

Im Einzelnen umfasst die vorliegende Erfindung eine besondere Form der saugseitigen Oberflächengestaltung an mindestens einer Rotorschaufel der Strömungsarbeitsmaschine, mit dem Ziel die Betriebsleistungen und/oder die Lebensdauer der Strömungsarbeitsmaschine zu verbessern.

Erfindungsgemäß ist für den Einsatz in einer Strömungsarbeitsmaschine eine Rotorschaufel geschaffen, die auf ihrer Saugseite mindestens zwei Zonen unterschiedlicher Oberflächenbeschaffenheit aufweist, derart, dass entweder

a) in mindestens einer der Zonen eine grenzschicht-energetisierende Struktur vorliegt, die durch Formung, Materialabtrag oder Materialauftrag erzeugt wird und durch mindestens eine schräg zur Vorderkante und zur Meridianströmungsrichtung orientierte Absatzkante gekennzeichnet ist,
oder

b) in mindestens einer der Zonen eine höhere Oberflächenrauhigkeit vorliegt, die durch Formgebung, Nachbehandlung, Partikelbeschuss oder Beschichtung erzeugt wird und bezüglich des Rauhigkeitswertes Ra einen Unterschied von mindestens 0,4 $\mu$m zu angrenzenden Zonen aufweist, sowie entweder mehr als 5% der Saugseitenfläche einnimmt oder im Wesentlichen schräg zur Vorderkante und zur Meridianströmungsrichtung orientiert ist.

Im Folgenden wird die Erfindung anhand von Ausführungsbeispielen in Verbindung mit den Figuren beschrieben. Dabei zeigt:

Fig. 1     eine Skizze der Leckageströmung am Rotorradialspalt,

Fig. 2     eine schematische Darstellung von Rotoren nach dem Stand der Technik,

Fig. 3     mögliche Konfigurationen erfindungsrelevanter Strömungsarbeitsmaschinen,

Fig. 4     die Definition von Meridianstromlinien und Stromlinienprofilschnitten,

Fig. 5     erfindungsrelevante geometrische Rotordimensionen,

Fig. 6     erfindungsgemäße Begrenzungslinien (saugseitig),

Fig. 7     eine erfindungsgemäße Oberflächenstruktur,

Fig. 8     Beispiele zur Schaffung erfindungsgemäß schräger Absatzkanten,

Fig. 9     weitere erfindungsgemäße Lösungen,

Fig. 10    weitere besonders günstige erfindungsgemäße Lösungen.

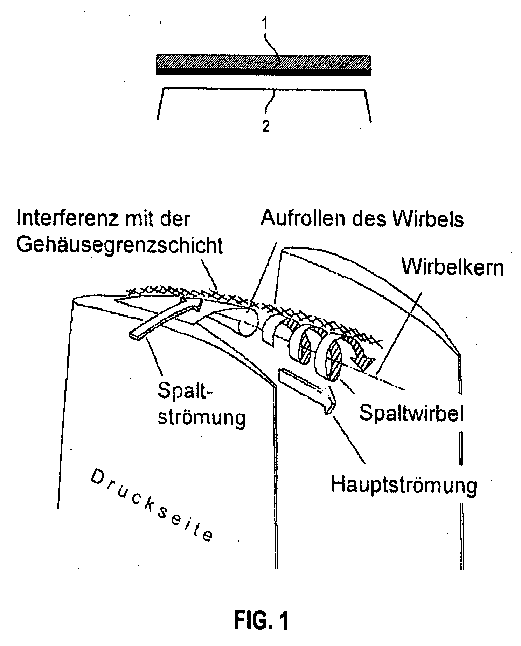

Die Fig. 1 zeigt eine Skizze der prinzipiellen Vorgänge der Leckageströmung am Rotorradialspalt, wobei die beiden Pfeile die Hauptströmung und die Spaltströmung darstellen und wobei die Interferenz mit der Gehäusegrenzschicht und der Spaltwirbel mit Wirbelkern gezeigt sind.

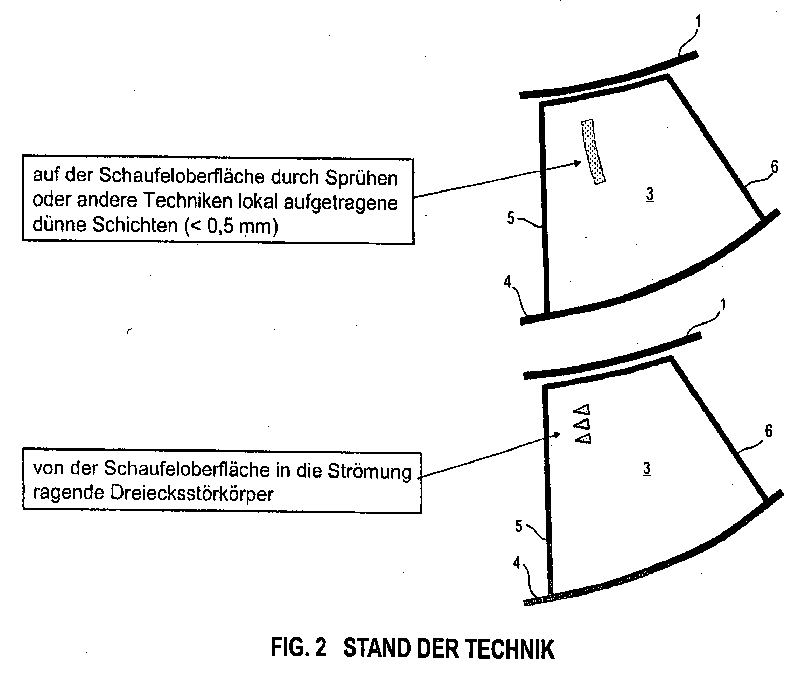

Die Fig. 2 zeigt eine schematische Darstellung von Rotorschaufeln nach dem Stand der Technik, bei welchem auf der Schaufeloberfläche Dreiecksstörkörper oder dünne Schichten aufgetragen sind.

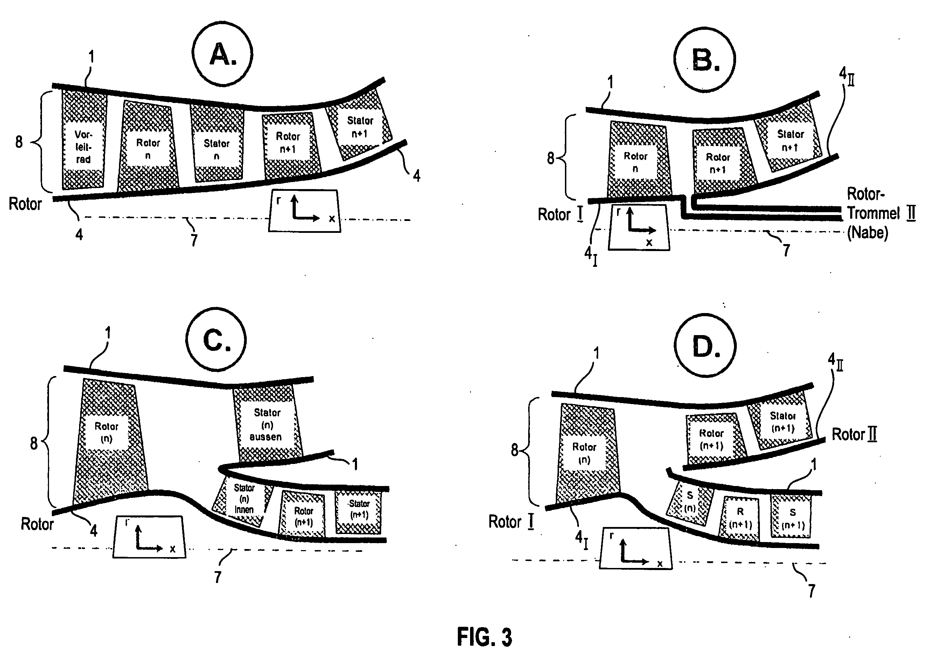

Fig. 3 zeigt vier nach dieser Beschreibung mögliche Konfigurationen der Strömungsarbeitsmaschine.

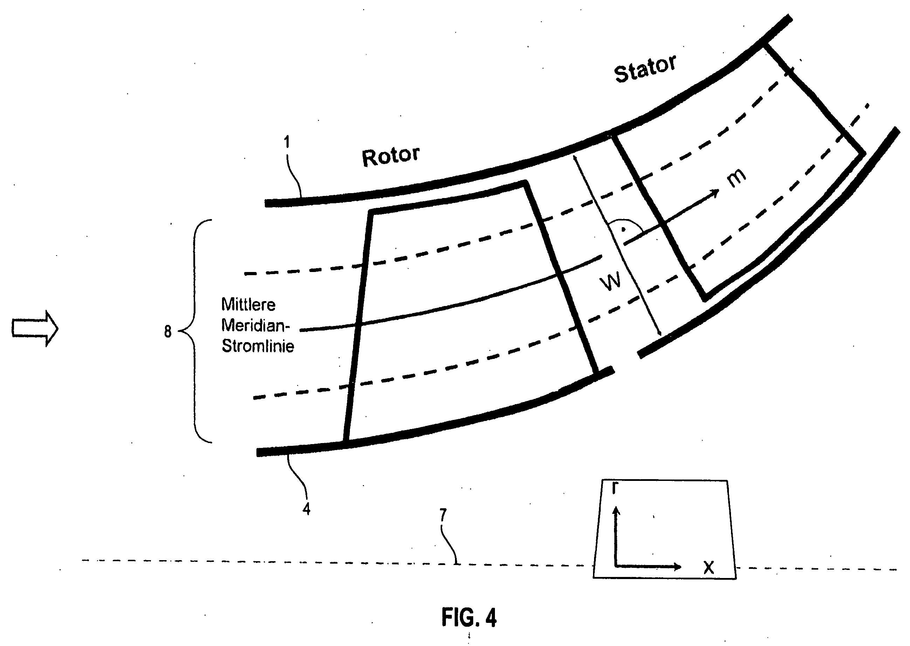

Die Fig. 4 gibt eine Definition der Meridianstromlinien und der Stromlinienprofilschnitte. Die mittlere Meridianstromlinie wird durch die geometrische Mitte des Ringkanals gebildet. Errichtet man an jedem Ort der mittleren Stromlinie eine Normale, so erhält man zum einen den Verlauf der Ringkanalweite W entlang des Strömungspfades und zum anderen eine Anzahl von Normalen, mit deren Hilfe sich bei gleicher relativer Unterteilung in Richtung der Kanalhöhe weitere Meridianstromlinien ergeben. Der Schnitt einer Meridianstromlinie mit einer Schaufel ergibt einen Stromlinienprofilschnitt.

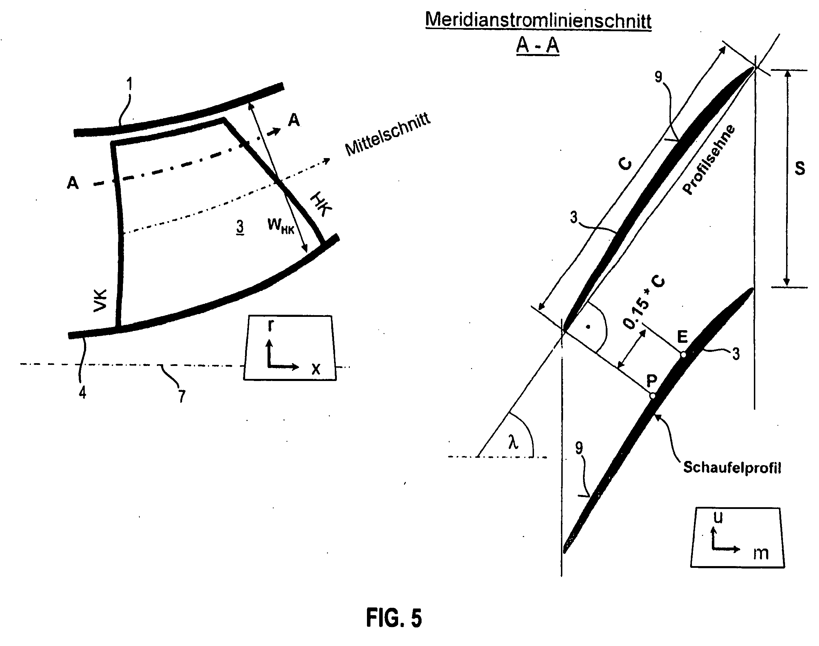

Die Fig. 5 zeigt die zur Bestimmung erfindungsmäßiger Begrenzungslinien nötigen Dimensionen eines Rotors. In der Meridianansicht des Rotors, links, ist die Hinterkantenkanalhöhe WHK, die senkrecht zur mittleren Stromlinie gemessen wird. Die rechte Bildhälfte zeigt einen Meridianstromlinienschnitt A-A auf einer beispielhaft gewählten Schaufelhöhe. Definiert sind hier die Sehnenlänge des Profils C, der Abstand zwischen zwei Schaufeln S sowie der durch senkrechte Projektion auf die Saugseite des Nachbarprofils erzeugte Punkt P und der um 15% der Sehnenlänge weiter stromab gelegene Punkt E.

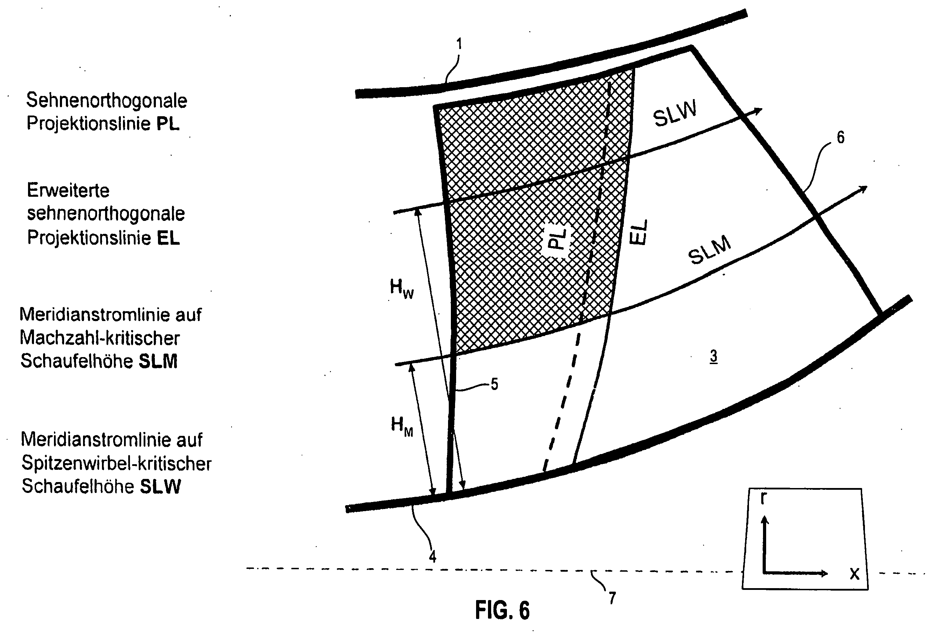

Die Fig. 6 zeigt in der Meridianansicht des Rotors vier unterschiedliche Begrenzungslinien, die für die Ortsauswahl der erfindungsgemäßen Oberflächen-Querstruktur bzw. der Zonen erhöhter Rauhigkeit notwendig sind. Die Linie PL entsteht durch die Verbindung aller Punkte P der Schaufelschnitte der Schaufel. Die Linie EL entsteht durch die Verbindung aller Punkte E. Die Linie SLM bezeichnet die Meridianstromlinie auf der Schaufelhöhe des Rotors, an der die relative Zuströmmachzahl 1 herrscht. Sie befindet sich bei einer konstanten relativen Höhe HM / W. Die Linie SLW bezeichnet die Meridianstromlinie auf der Schaufelhöhe des Rotors, bis zu der vom Gehäuse aus mit einem starken Einfluss der Spaltleckageströmung bzw. des Spaltwirbels zu rechnen ist. Sie befindet sich auf der konstanten relativen Höhe

$$HW/W = 0,95 - (S/WHK)(0,35 + 0,15\ (1-\cos\ lambda))$$

der hierzu verwendete Staffelungswinkel lamda und der Abstand zwischen 2 Rotorschaufeln S werden im Schaufelschnitt unmittelbar am Gehäuse gemessen.

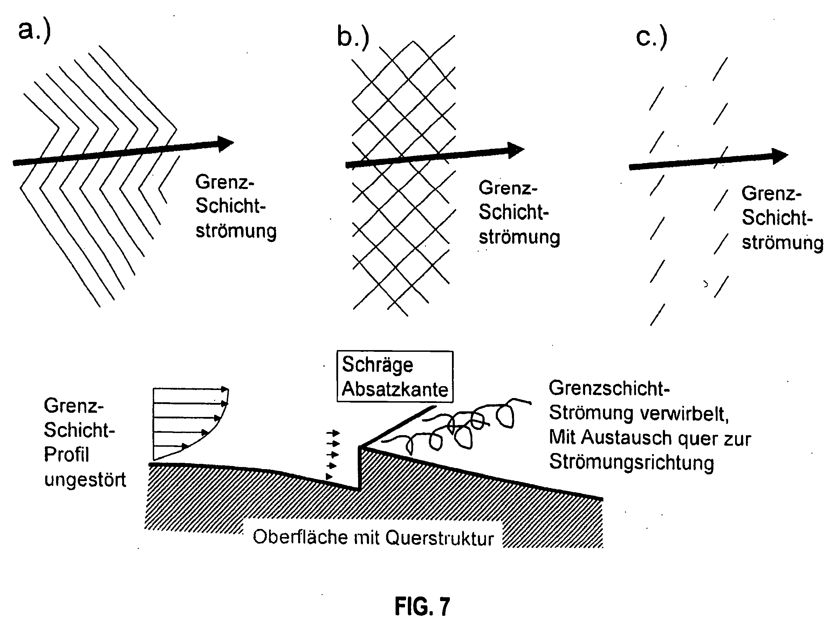

Die Fig. 7 zeigt unterschiedliche erfindungsgemäß mögliche Oberflächen-Querstrukturen, denen gemeinsam ist, dass sie durch die zugehörigen, quer zur Grenzschichtströmung angeordneten Absatzkanten Wirbelstrukturen erzeugen, die eine Durchmischung der Grenzschicht quer zur Strömungsrichtung (entlang der Oberfläche) bewirken, siehe Bildteil unten.

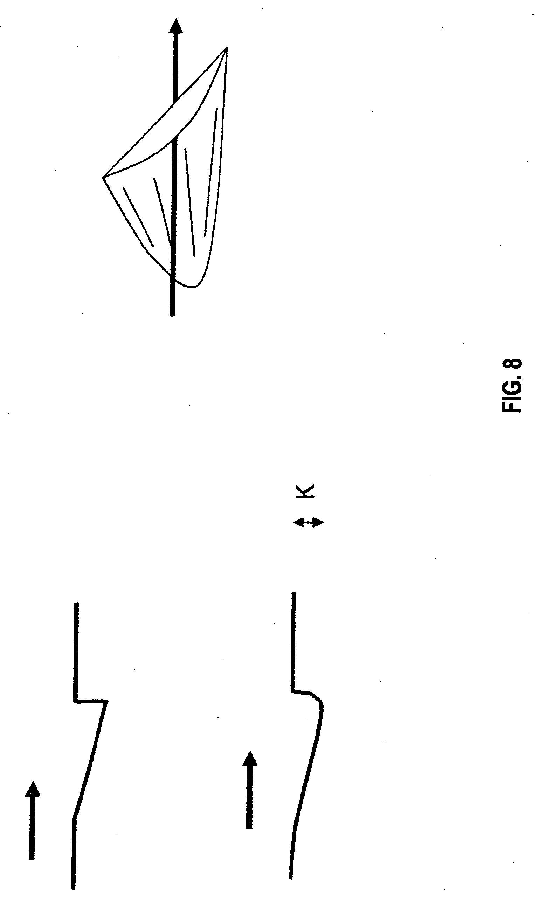

Die Fig. 8 gibt Beispiele konkreter Ausführungen der Absatzkanten, die, wie in Fig.7 angedeutet, über längere Strecken durchgängig sein können oder auch nur auf unterbrochenen kurzen Abschnitten bestehen können. So können flach auf die schräge Kante zulaufende Ausnehmungen mit spitzen oder auch ausgerundeten Ecken verwendet werden. Alternativ kann die Kante selbst eine Erhöhung über der Oberfläche darstellen. Möglich sind auch grübchenhafte Einzelausnehmungen oder entsprechende Erhöhungen auf der Oberfläche. Dabei ist K die Höhe in der Größe der Grenzschichtdicke.

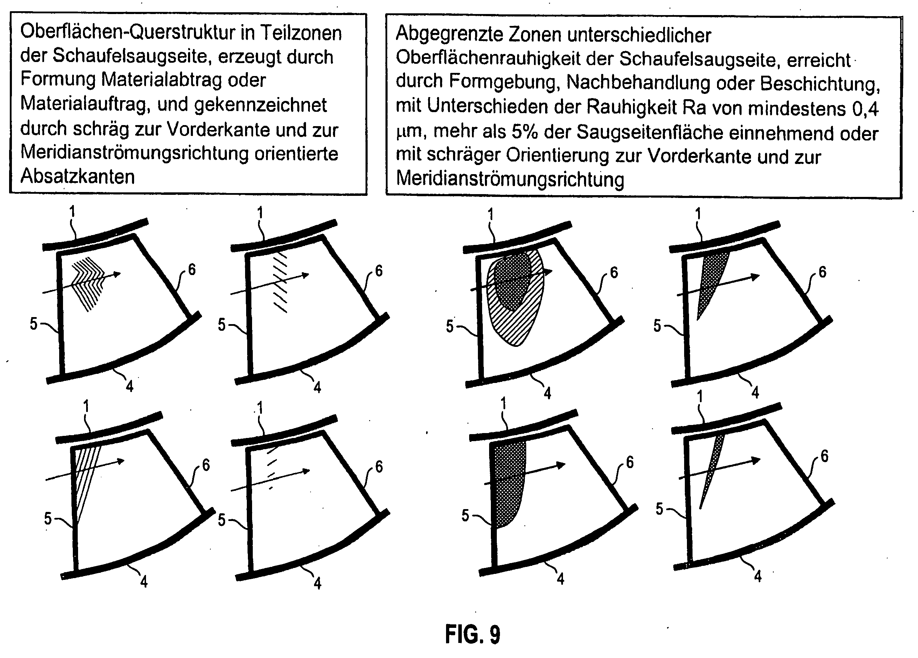

Die Fig. 9 zeigt schließlich eine Anzahl erfindungsgemäßer Anordnungen.

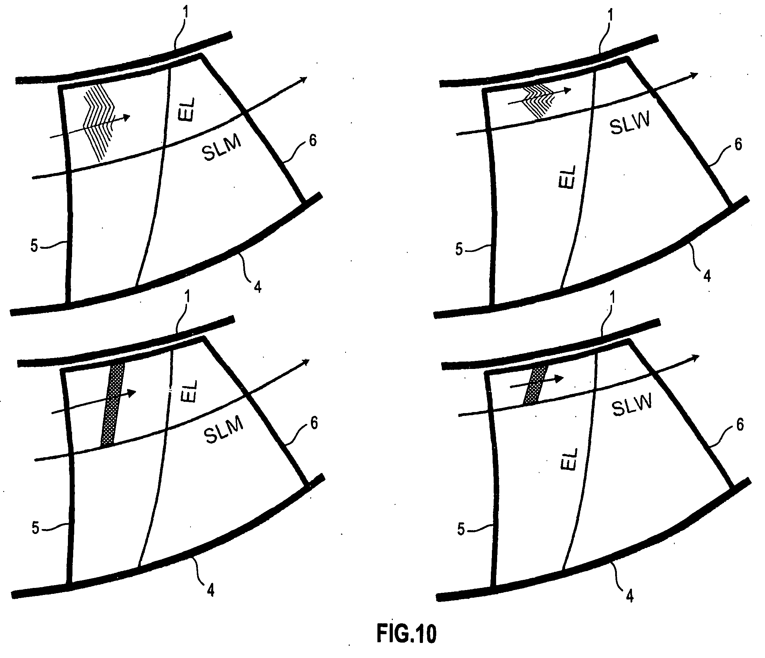

Die Fig. 10 zeigt erfindungsgemäß besonders wirksame Lösungen, bei denen die Oberflächen-Querstruktur bzw. die Zone erhöhter Rauhigkeit im Gebiet zwischen Vorderkante, Gehäuselinie, der Linie SLM und der Linie EL angeordnet ist. Besonders wirksam ist, wenn die Oberflächen-Querstruktur bzw. die Zone erhöhter Rauhigkeit im Gebiet zwischen Vorderkante, Gehäuselinie, der Linie SLW und der Linie EL angeordnet ist.

Die vorliegende Erfindung erlaubt eine Vergleichmäßigung und Beruhigung der Strömung im Schaufelrandbereich und kann auf diese Weise insbesondere bei Rotoren in kritischen Fällen eine von dort ausgehende Störung des Betriebsverhaltens vermeiden. Insbesondere die im Fußbereich von Fanschaufeln auftretenden vibratorischen Verschleißerscheinungen, die durch Strömungsinstabilitäten im Blattspitzenbereich der Schaufel hervorgerufen werden, werden bei Anwendung der vorliegenden Erfindung extrem wirksam reduziert. Eine Erhöhung des Stufenwirkungsgrades von rund 0,5 % scheint möglich. Bei Einsatz des Konzeptes am Fan eines Flugtriebwerkes mit rund 25000 Pfund Schub ergibt eine Reduzierung des spezifischen Kraftstoffverbrauches von bis zu 0,5% Ein möglicher Zugewinn an Stabilität, d.h. eine Erhöhung der Abreißgrenze der Strömungsarbeitsmaschine, ist mit rund 5 % anzugeben.

Bezugszeichenliste

1   Gehäuse/Gehäuselinie
2   Rotorspitze
3   Rotorschaufel
4   Nabe (Rotortrommel)
5   Vorderkante
6   Hinterkante
7   Maschinenachse
8   Ringkanal
9   Saugseite

**Patentansprüche**

1.  Strömungsarbeitsmaschine mit zumindest einem mit Rotorschaufeln (3) versehenen Rotor, wobei die Rotorschaufel (3) auf einer Saugseite (9) mindestens zwei Zonen unterschiedlicher Oberflächenbeschaffenheit aufweist, **dadurch gekennzeichnet, dass** die eine Zone zwischen einer Vorderkante (5) der Rotorschaufel (3), einer Gehäuselinie (1), einer Meridianstromlinie auf spitzenwirbel-kritischer Schaufelhöhe (SLW) und einer sehnenorthogonalen Projektionslinie (EL) angeordnet ist und mit einer grenzschicht-energetisierenden Oberflächenstruktur versehen ist, wobei die Linie SLW auf einer wie folgt definierten relativen Kanalhöhe HW/W verläuft:

$$HW/W = 0{,}95 - (S/WHK)(0{,}35 + 0{,}15 (1\text{-}cos\ lambda))$$

wobei

lambda der Staffelungswinkel am Rotorgehäuseschnitt,
S der Abstand zwischen zwei Rotorschaufeln (3) am Rotorgehäuseschnitt,
WHK eine Hinterkantenkanalweite,
W eine Kanalweite und
HW die in Kanalweitenrichtung gemessene Distanz zwischen der Nabe und der Linie SLW sind.

2.  Rotorschaufel nach Anspruch 1, **dadurch gekennzeichnet, dass** die grenzschicht-energetisierende Struktur mindestens eine schräg zur Vorderkante (5) und zur Meridianströmungsrichtung orientierte Absatzkante umfasst.

3.  Rotorschaufel nach Anspruch 2, **dadurch gekennzeichnet, dass** die Absatzkante durchgängig ausgebildet ist.

4.  Rotorschaufel nach Anspruch 3, **dadurch gekennzeichnet, dass** die Absatzkante auf kurzen, unterbrochenen Abschnitten der Rotorschaufel (3) ausgebildet ist.

5.  Rotorschaufel nach einem der Ansprüche 1 bis 4, **dadurch gekennzeichnet, dass** die Absatzkante in Form einer flachen, auf eine schräge Kante zulaufenden Ausnehmung mit spitzen oder ausgerundeten Ecken ausgebildet ist.

6.  Rotorschaufel nach einem der Ansprüche 1 bis 5, **dadurch gekennzeichnet, dass** die Absatzkante in Form von grübchenhaften Einzelausnehmungen ausgebildet ist.

7.  Rotorschaufel nach einem der Ansprüche 1 bis 6, **dadurch gekennzeichnet, dass** die Absatzkante durch Erhöhungen auf der Oberfläche der Rotorschaufel (3) ausgebildet ist.

8.  Rotorschaufel nach einem der Ansprüche 1 bis 7, **dadurch gekennzeichnet, dass** die grenzschicht-energetisierende Struktur durch eine Zone mit einer höheren Oberflächenrauhigkeit ausgebildet ist.

9.  Rotorschaufel nach Anspruch 8, **dadurch gekennzeichnet, dass** die Oberflächenrauhigkeit durch Formgebung, Nachbehandlung, Partikelbeschuss und/oder Beschichtung hergestellt ist.

10. Rotorschaufel nach Anspruch 8 oder 9, **dadurch gekennzeichnet, dass** die Oberflächenrauhigkeit einen Rauhigkeitswert (Ra) mit einem Unterschied von mindestens 0,4 $\mu$m zu angrenzenden Zonen aufweist.

11. Rotorschaufel nach einem der Ansprüche 8 bis 10, **dadurch gekennzeichnet, dass** die grenzschicht-energetisierende Struktur mehr als 5 % der Saugflächenseite (9) der Rotorschaufel (3) einnimmt.

12. Rotorschaufel nach einem der Ansprüche 8 bis 10, **dadurch gekennzeichnet, dass** die grenzschicht-energetisierende Struktur im Wesentlichen schräg zur Vorderkante (5) und zur Meridianströmungsrichtung angeordnet ist.

**Claims**

1. Fluid-flow machine with at least one rotor provided with rotor blades (3), where the rotor blade (3) features on a suction side (9) at least two zones of different surface finish, **characterized in that** the one zone is positioned between a rotor blade (3) leading edge (5), a casing line (1), a meridional flow line at a tip vortex-critical blade height (SLW) and a chord-orthogonal projection line (EL) and is provided with a boundary layer-energizing surface structure, with the line SLW extending on a relative duct height HW/W defined as follows:

$$HW/W = 0.95 - (S/WHK)\,(0.35 + 0.15\,(1\text{-cos lambda})),$$

where

lambda is the stagger angle at the rotor casing section,
S is the spacing between two rotor blades (3) at the rotor casing section,
WHK is a trailing edge duct width,
W is a duct width, and
HW is the distance between the hub and the line SLW measured in the direction of the duct width.

2. Rotor blade in accordance with Claim 1, **characterized in that** the boundary layer-energizing structure includes at least one step edge orientated obliquely to the leading edge (5) and to the meridional flow direction.

3. Rotor blade in accordance with Claim 2, **characterized in that** the step edge is designed continuous.

4. Rotor blade in accordance with Claim 3, **characterized in that** the step edge is provided on short, interrupted sections of the rotor blade (3).

5. Rotor blade in accordance with one of the Claims 1 to 4, **characterized in that** the step edge is designed in the form of a flat recess with pointed or rounded corners which extends towards an oblique edge.

6. Rotor blade in accordance with one of the Claims 1 to 5, **characterized in that** the step edge is designed in the form of dimple-type individual recesses.

7. Rotor blade in accordance with one of the Claims 1 to 6, **characterized in that** the step edge is designed in the form of protrusions on the surface of the rotor blade (3).

8. Rotor blade in accordance with one of the Claims 1 to 7, **characterized in that** the boundary layer-energizing structure is formed by a zone having a higher surface roughness.

9. Rotor blade in accordance with Claim 8, **characterized in that** the surface roughness is produced by forming, post-treatment, particle impingement and/ or coating.

10. Rotor blade in accordance with Claim 8 or 9, **characterized in that** the surface roughness has a roughness value (Ra) that differs by at least 0.4 $\mu$m to adjacent zones.

11. Rotor blade in accordance with one of the Claims 8 to 10, **characterized in that** the boundary layer-energizing structure occupies more than 5 percent of the suction side (9) of the rotor blade (3).

**12.** Rotor blade in accordance with one of the Claims 8 to 10, **characterized in that** the boundary layer-energizing structure is essentially oblique to the leading edge (5) and to the meridional flow direction.

**Revendications**

**1.** Machine à écoulement comprenant au moins un rotor muni d'aubes de rotor (3), l'aube de rotor (3) présentant d'un côté aspiration (9) au moins deux zones aux états de surface différents, **caractérisée en ce que** l'une des zones est située entre un bord d'attaque (5) de l'aube de rotor (3), une ligne de carter (1), une ligne d'écoulement méridienne à hauteur d'aube critique pour le tourbillon d'extrémité (SLW) et une ligne de projection orthogonale à la corde (EL), et est munie d'une structure superficielle énergisant la couche limite, la ligne SLW s'étendant à une hauteur de canal relative HW/W définie comme suit :

$$HW/W = 0,95 - (S/WHK) (0,35 + 0,15 (1\text{-cos lambda})),$$

où

lambda est l'angle de décalage sur la section de carter de rotor,
S la distance entre deux aubes de rotor (3) sur la section de carter de rotor,
WHK une largeur de canal de bord de fuite,
W une largeur de canal, et
HW la distance entre le moyeu et la ligne SLW, mesurée dans le sens de la largeur du canal.

**2.** Aube de rotor selon la revendication n° 1, **caractérisée en ce que** la structure énergisant la couche limite comprend au moins un bord d'épaulement oblique par rapport au bord d'attaque (5) et au sens d'écoulement méridien.

**3.** Aube de rotor selon la revendication n° 2, **caractérisée en ce que** le bord d'épaulement est conçu en continu.

**4.** Aube de rotor selon la revendication n° 3, **caractérisée en ce que** le bord d'épaulement est formé sur des parties courtes, discontinues de l'aube de rotor (3).

**5.** Aube de rotor selon une des revendications n° 1 à n° 4, **caractérisée en ce que** le bord d'épaulement est conçu sous la forme d'un évidement aplati s'étendant en direction d'une arête inclinée, avec coins anguleux ou arrondis.

**6.** Aube de rotor selon une des revendications n° 1 à n° 5, **caractérisée en ce que** le bord d'épaulement est conçu sous la forme d'évidements isolés à la manière de piqûres.

**7.** Aube de rotor selon une des revendications n° 1 à n° 6, **caractérisée en ce que** le bord d'épaulement est formé par des élévations sur la surface de l'aube de rotor (3).

**8.** Aube de rotor selon une des revendications n° 1 à n° 7, **caractérisée en ce que** la structure énergisant la couche limite est formée par une zone présentant une rugosité superficielle plus élevée.

**9.** Aube de rotor selon la revendication n° 8, **caractérisée en ce que** la rugosité superficielle est obtenue par façonnage, retraitement, bombardement de particules et/ou revêtement.

**10.** Aube de rotor selon la revendication n° 8 ou n° 9, **caractérisée en ce que** la rugosité superficielle présente une valeur de rugosité (Ra) différente d'au moins 0,4 $\mu$m de celle des zones avoisinantes.

**11.** Aube de rotor selon une des revendications n° 8 à n° 10, **caractérisée en ce que** la structure énergisant la couche limite occupe plus de 5 % du côté de la surface d'aspiration (9) de l'aube de rotor (3).

**12.** Aube de rotor selon une des revendications n° 8 à n° 10, **caractérisée en ce que** la structure énergisant la couche limite est pour l'essentiel disposée en oblique par rapport au bord d'attaque (5) et au sens d'écoulement méridien.

FIG. 1

auf der Schaufeloberfläche durch Sprühen oder andere Techniken lokal aufgetragene dünne Schichten (< 0,5 mm)

von der Schaufeloberfläche in die Strömung ragende Dreiecksstörkörper

**FIG. 2  STAND DER TECHNIK**

EP 1 953 340 B1

FIG. 3

EP 1 953 340 B1

FIG. 4

EP 1 953 340 B1

## Meridianstromlinienschnitt
## A - A

**FIG. 5**

Sehnenorthogonale
Projektionslinie **PL**

Erweiterte
sehnenorthogonale
Projektionslinie **EL**

Meridianstromlinie auf
Machzahl-kritischer
Schaufelhöhe **SLM**

Meridianstromlinie auf
Spitzenwirbel-kritischer
Schaufelhöhe **SLW**

1

6

SLW

PL

EL

SLM

$H_W$

$H_M$

3

5

4

7

r

x

**FIG. 6**

a.)

Grenz-
Schichtströmung

b.)

Grenz-
Schichtströmung

c.)

Grenz-
Schichtströmung

Grenz-
Schicht-
Profil
ungestört

Schräge
Absatzkante

Grenzschicht-
Strömung verwirbelt,
Mit Austausch quer zur
Strömungsrichtung

Oberfläche mit Querstruktur

**FIG. 7**

EP 1 953 340 B1

**FIG. 8**

K

| Oberflächen-Querstruktur in Teilzonen der Schaufelsaugseite, erzeugt durch Formung Materialabtrag oder Materialauftrag, und gekennzeichnet durch schräg zur Vorderkante und zur Meridianströmungsrichtung orientierte Absatzkanten | Abgegrenzte Zonen unterschiedlicher Oberflächenrauhigkeit der Schaufelsaugseite, erreicht durch Formgebung, Nachbehandlung oder Beschichtung, mit Unterschieden der Rauhigkeit Ra von mindestens 0,4 µm, mehr als 5% der Saugseitenfläche einnehmend oder mit schräger Orientierung zur Vorderkante und zur Meridianströmungsrichtung |

**FIG. 9**

FIG.10

**IN DER BESCHREIBUNG AUFGEFÜHRTE DOKUMENTE**

**In der Beschreibung aufgeführte Patentdokumente**

- EP 1580399 A
- WO 9844240 A